# EUROPÄISCHE PATENTSCHRIFT

(11) **EP 3 334 557 B1**
(45) Veröffentlichungstag und Bekanntmachung des Hinweises auf die Patenterteilung: **30.07.2025**
(21) Anmeldenummer: 16763713.1
(22) Anmeldetag: 10.08.2016
(51) Int. Cl.: B23K 101/04, B23K 20/12, B23K 37/02

(54) **VERFAHREN ZUM HOMOGENEN VERSCHWEISSEN FLÄCHIG GEBOGENER STRUKTUREN DURCH RÜHRREIBSCHWEISSEN**
METHOD FOR HOMOGENEOUSLY WELDING TWO-DIMENSIONALLY BENT STRUCTURES BY FRICTION STIR WELDING
PROCÉDÉ DE SOUDAGE HOMOGÈNE DE STRUCTURES CINTRÉES À PLAT PAR SOUDAGE PAR FRICTION-MALAXAGE

(30) Priorität: 13.08.2015 DE 102015010638
(43) Veröffentlichungstag der Anmeldung: 20.06.2018
(73) Patentinhaber: Grenzebach Maschinenbau GmbH, 86663 Asbach-Baeumenheim (DE)
(72) Erfinder: WEIGL, Markus, 86609 Donauwörth (DE)
(74) Vertreter: Page, White & Farrer Germany LLP
(86) Internationale Anmeldenummer: PCT/DE2016/000312
(87) Internationale Veröffentlichungsnummer: WO 2017/025078

(56) Entgegenhaltungen:
- DE-U1- 202012 005 397
- DE-U1- 202014 000 747
- DE-U1- 202014 003 072
- DE-U1- 202015 000 949

## Beschreibung

Die Erfindung betrifft ein Verfahren zur Verwendung einer Vorrichtung zum homogenen Verschweißen flächig gebogener Strukturen durch Rührreibschweißen.

Zum Stand der Technik ist aus der Patentliteratur unter anderen die Druckschrift EP 2 027 962 A1 bekannt, die ein Schweißgerät und ein Schweißverfahren zum Orbitalschweißen von Rohren betrifft. In dieser Druckschrift wurden einige Nachteile des bekannten Standes der Technik genannt, deren Beseitigung das Ziel dieser Anmeldung ist. Nach den Angaben im Anspruch 1 handelt es sich hierbei um ein Lichtbogen-Schweißgerät, umfassend einen Schweißkopf zur Aufbringung eines Schweißlichtbogens mit einer Schweißleistung auf eine Fügestelle zwischen einem ersten und zweiten Werkstück zur Erzeugung eines Schweißbades, wobei der Schweißlichtbogen relativ zu dem ersten und zweiten Werkstück bewegbar ist. Als Erfindung wird hier im Kennzeichen des Anspruchs 1 beansprucht, dass das Schweißgerät eine Temperaturmessvorrichtung zur Messung einer Temperatur im Umfeld des Schweißbades und eine Regelungsvorrichtung umfasst, wobei die Regelungseinrichtung ausgebildet ist, in Abhängigkeit von der gemessenen Temperatur mindestens ein Signal zu generieren, welches zur Steuerung von zumindest einem Schweißparameter dient. Weiter wird beansprucht, dass hierbei vorzugsweise die Temperaturmessvorrichtung als Pyrometer ausgebildet ist und/oder die Temperaturmessvorrichtung so angeordnet ist, dass die Temperatur an zumindest einem Temperaturmesspunkt vor, neben und/oder hinter dem Schweißbad gemessen wird, wobei vorzugsweise die Temperaturmessvorrichtung so angeordnet ist, dass sie einen Bereich umfasst, dessen Temperatur einen Rückschluss auf die Schweißbadtemperatur zulässt.

Generell führt das Orbitalschweißen von rohrförmigen Bauteilen mit konventionellen Schweißverfahren, wie dem MIG- oder MAG-Schweißen aufgrund der Einwirkung der Schwerkraft auf die Schmelze und das Schutzgas zu einem sehr hohen Aufwand hinsichtlich der Prozesskontrolle. Bei der Anwendung des Orbitalschweißens im Feld, beispielsweise für erdverlegte Stromtrassen und Pipelines, sind konventionelle Orbitalverfahren zudem sehr anfällig hinsichtlich der Umgebungsbedingungen.

Aus der den Oberbegriff des Patentanspruchs 1 bildenden Druckschrift DE 20 2015 000 949 U1 ist eine Vorrichtung zum homogenen Verschweißen flächig gebogener Strukturen in der Form mindestens zweier Fügepartner durch Rührreibschweißen bekannt, wobei eine Gleitfläche eines Querstegs des Schweißschuhs in ihrer Wölbung der Oberflächenwölbung der beiden Fügepartner formanagepasst ist.

Zum Stand der Technik wird weiter auf die EP 2 561 948 A1 verwiesen, die ein Verfahren und eine Anlage zum Herstellen eines Flansch-Rohr-Flansch-Elements mittels Rührreibschweißens betrifft. Einer solchen Anlage liegt die Zielsetzung zugrunde, das Zentrieren von Flansch und Rohr zu vereinfachen und die Schweißbadsicherung neben dem Abstützen des durch das Rührreibschweißen erweichten Bereichs auch zur Aufnahme der Anpresskräfte beim Rührreibschweißen und zum Zentrieren des Rohres nach der Längsachse der Flansche unter Wegfall von Mess- und Einrichtvorgängen bei gleichzeitiger Reduzierung der Fertigungszeiten, unter Einsparung von Material und Gewährleistung wirtschaftlicher Vorteile zu nutzen. Hierbei wird die Schweißbadsicherung als eine pneumatisch spann- und lösbare Spann- und Abstützscheibe zum Zentrieren des Rohres auf die Drehachse der Flansche und zum Aufnehmen der Anpresskräfte beim Rührreibschweißen ausgebildet ist, wobei ein Sensor zum Abtasten der Stoßfugen zwischen Rohr und Flansch vorgesehen ist, und ferner eine Vorrichtung zum An- und Abfahren eines Formkeils in Flucht der horizontal oberhalb der Drehachse liegenden, durch die Stoßfuge verlaufenden Tangentialebene vorgesehen ist, um die Rührreibschweißsonde des Rührreibschweißwerkzeugs lochfrei aus der rührreibgeschweißten Stoßfuge herauszubewegen, wobei der Sensor und die Vorrichtung zum An- und Abfahren des Formkeils mit der Steuerung verbunden ist.

Beim Rührreibschweißen wird im Fügebereich der zu verschweißenden Materialien mittels der Reibung zwischen einem rotierenden, gleichzeitig translatorisch bewegten und mit Druck aufgebrachten, Werkzeug Reibungswärme erzeugt die die zu verschweißenden Materialien in einen plastifizierten Zustand versetzt. Das Werkzeug wird hierbei entlang des Fügebereichs bewegt und verrührt das plastifizierte Material im Inneren der Naht der zu verbindenden aneinander stoßenden Materialien. Am Ende dieser Naht wird das Werkzeug aus dem Verbindungsbereich herausgezogen und die Schweißnaht ist unmittelbar belastbar.

Aus der Druckschrift DE 20 2014 003072 U1 ist eine Vorrichtung bekannt, welche zum homogenen Verschweißen von geraden Strukturen geeignet ist. Sie besitzt hierbei Dehnungs-Meßstreifen, die im Abstand von 120 Grad am Umfang des Werkzeug-Aufnahmekegels verteilt sind.

Weiterhin ist aus der Druckschrift DE 20 2014 000 747 U1 eine Vorrichtung zum Rührreibschweißen von Materialien unterschiedlicher Dicke und bei Kehlnähten bekannt, wobei ein Schweißschuh eine Schuh-Gleitfläche und eine Schuh-Glättfläche als Quersteg aufweist, der für Kehlnähte spitzwinkelig und für verschiedene Materialdicken abgeschrägt ausgebildet ist.

Schließlich ist aus der Druckschrift DE 20 2012 005 397 U1 eine Vorrichtung zur Verbesserung der Qualität einer Schweißnaht beim Rührreibschweißen bekannt, wobei der Schweißschuh eine ebene Gleitfläche und zwei daran anschließende und hierzu geneigte in sich gewölbte Gleitflächen aufweist.

Der Erfindung liegt die Aufgabe zugrunde, ein Verfahren zur Verwendung der Vorrichtung gemäß dem Oberbegriff des Patentanspruchs 1 zu schaffen, wobei eine Lochbildung im Austrittsbereich des Schweißpins weiter verringert ist.

Erfindungsgemäß wird diese Aufgabe durch die kennzeichnenden Merkmale des neuen Patentanspruchs 1 gelöst.

Im Unteranspruch 2 ist eine vorteilhafte Ausgestaltung der Erfindung gekennzeichnet.

Die erfindungsgemäße Vorrichtung wird im Folgenden näher beschrieben.

Es zeigen im Einzelnen:
Fig.1: eine Seitenansicht einer Anordnung zum Rührreibschweißen,
Fig.2: die Darstellung eines bevorzugten Schweißschuhs,
Fig.3: die Schnitt-Darstellung eines Pin-Austritts, und Fig.4: Einzelheiten der Messwert - Erfassung in einem Haltekegel 3

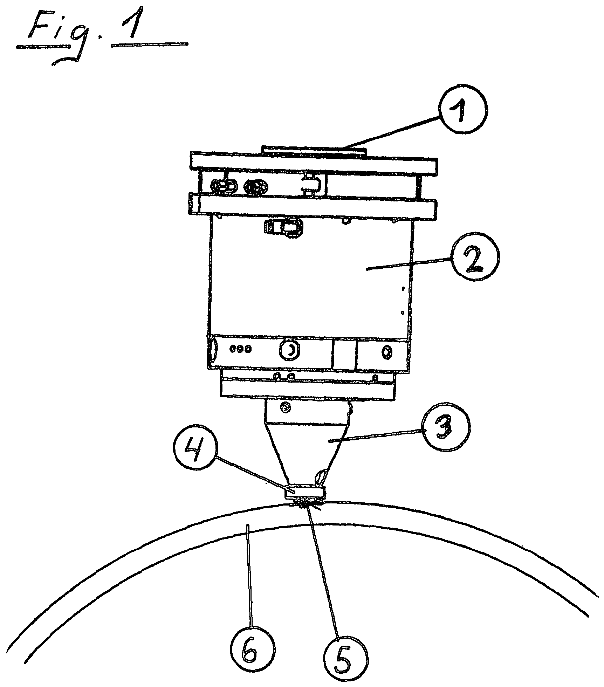

In der Fig.1 ist eine Seitenansicht einer Anordnung zum Rührreibschweißen auf einer flächig gebogenen Struktur gezeigt. Eine Aufnahmeplatte 1, die von einem, hier nicht gezeigten, Roboterarm geführt werden kann, trägt einen Antriebskopf 2 mit einer Werkzeugglocke 3 zur Aufnahme eines Schweißschuhs. Der Schweißschuh mit seinem Pinlager 5 wird hierbei von einem Haltering 4 auf dem Haltekegel 3 befestigt. Das von vorne zu sehende Bauteil der im Querschnitt dargestellten gebogenen Struktur der beiden Fügepartner ist mit 6 bezeichnet.

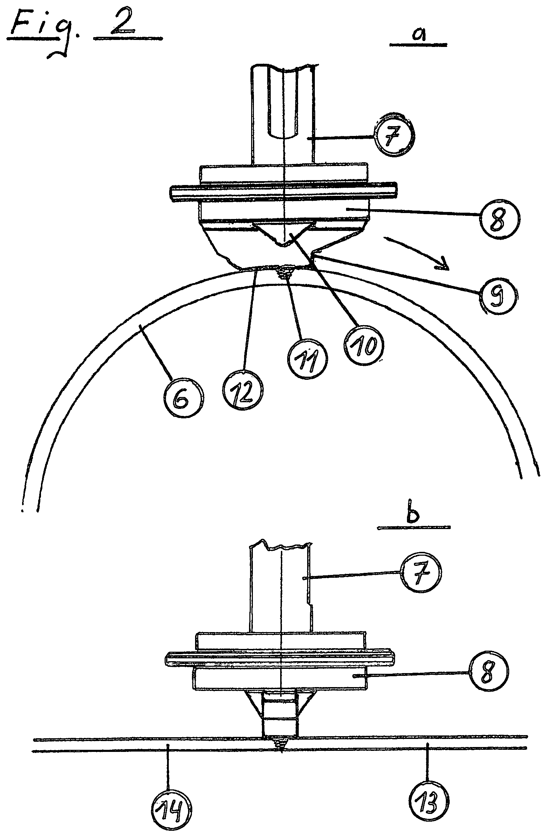

Die Fig.2: zeigt die Darstellung eines bevorzugten Schweißschuhs.8. Hierbei ist in der Fia.2a) ein Schweißschuh 8 quer zu der Bewegungsrichtung des Schweißvorgangs über die beiden flächig gebogenen Fügepartner, die hier im Querschnitt zu sehen sind, dargestellt. Hierbei ist weiter die Gleitfläche des Schweißschuhs 8 im Wesentlichen der Krümmung der Oberfläche der Fügepartner 6 angepasst. In der Fig.2b) ist derselbe Schweißschuh direkt in der Bewegungsrichtung des Schweißvorgangs zu sehen, wobei die beiden Fügepartner quer zu ihrer gebogenen Fläche in linearer Form zu sehen sind. Der Pinschaft 7 des Schweißschuhs 8 mit seinem Pinlager 5 ist in beiden Figuren wegen seines Haltemechanismus unterschiedlich zu erkennen. In der Fig.2a) sind der Materialaustritts - Bereich 10 und der Schweißpin 11 bezeichnet.

Der Schweißschuh (8) weist eine kreisförmige Grundform auf, auf der sich, über den Querschnitt verlaufend und im rechten Winkel zu dieser Grundform verlaufend, ein Quersteg befindet der ungefähr die Breite von 1/4 bis 1/5 des Durchmessers der Grundform aufweist und eine bogenförmige Schuh - Gleitfläche und Schuh - Glättfläche aufweist, wobei sich auf der Vorderseite dieser Fläche im Bereich des Randes dieser Fläche eine kleine ebene Fläche in der Form einer kerbartigen Verjüngung, eine Span - Leitstufe 9, befindet,

An der Vorderseite des Schweißschuhs 8, die mittels des gezeigten Pfeils zur Kennzeichnung der Bewegungsrichtung des Schweißvorgangs zu erkennen ist, ist die Span - Leitstufe 9 dargestellt. Der betreffende Fügepartner 6 ist in der Fig.2a) in gebogener Form zu sehen. In der Darstellung der Fig.2b) sind zusätzlich mit 13 der hintere Fügepartner und mit 14 der vordere Fügepartner bezeichnet.

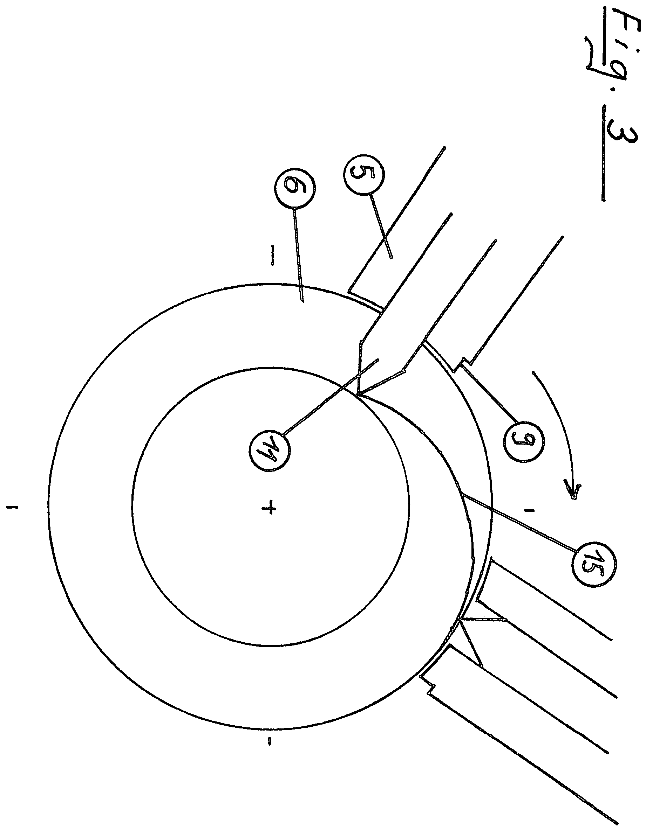

Die Fig.3:zeigt die Schnitt - Darstellung eines Pin - Austritts. Die hier gezeigten beiden konzentrischen Kreise stellen den Querschnitt eines Fügepartners 6 dar der in diesem Fall aus Gründen der vereinfachten Darstellung ein, im Verhältnis zu dem Schweißschuh 5 mit seinem Schweißpin 11, Rohr mit geringem Durchmesser darstellt. Insbesondere kann der Reibstift eine konische Form des im Material befindlichen Endes aufweisen um die Volumenveränderung bei einer Rückzugsbewegung linear zu halten.

Auf der linken Seite ist der Schweißpin 11 in einer Stellung zu sehen in der er beginnt den Vorgang des Rührreibschweißens zu beenden und sich anschickt den Druck auf die Fügepartner zu verringern und sich aus dem Kontakt mit den Fügepartnern zurückzuziehen. Da bei diesem Vorgang des Rückzugs des Schweißpins 11 sich der Schweißschuh 5 auf dem Weg des Schweißvorgangs in Pfeilrichtung weiterbewegt entsteht aus der Überlagerung der aufgezeigten Bewegungen die dargestellte Austrittskurve 15.

Diese Bewegung setzt sich aus zwei Anteilen zusammen. So erfolgt der Rückzug des Pins im eigentlichen Sinn, d.h. das drehende Element wird zusätzlich axial verschoben. Ferner erfolgt ein Vorschieben der statischen, nicht drehenden Schulter während der drehende Pin nicht längsverstellt wird .Hierbei erfolgt eine Positionsregelung des Reibstifts und eine Kraftregelung des Schuhs. Beide Regelungen werden erfindungsgemäß synchronisiert.

In allen Fällen muss der Verdichtungsprozess durch entsprechende Anpressverhältnisse sichergestellt werden, dh. Die Wahrung bestimmter Druckverhältnisse ist essentiell.

Die in der Fig.3 gezeigte Darstellung ist nur beispielhaft. Anstelle der der gezeigten kontinuierlich verlaufenden Austrittskurve 15 kann sich ebenso eine stufenförmig verlaufende Austrittskurve im Einzelfall als zweckdienlich erweisen. Bei allen beschriebenen Vorgängen ist es jedoch wichtig Kenntnis davon zu haben welche Temperatur der Schweißpin 11 aufweist. Zu diesem Zweck ist ein, in keiner Figur gezeigter, besonderer Temperatursensor, insbesondere ein Infrarot - Sensor, vorgesehen. Die Art dieses Temperatursensors richtet sich jeweils nach der besonderen Aufgabe und kann entweder die Temperatur des Schweißpins direkt ermitteln oder über die Messung der Umgebungstemperatur des betreffenden Schweißprozesses indirekt erfolgen.

Die Austrittskurve 15 und der gesamte Schweißprozess sind hierbei 3 D - fähig. Das heißt, dass der gesamte Schweißprozess wegen der Erfassung aller relevanten Prozessparameter in Echtzeit in allen Raumebenen und in alle Raumrichtungen erfolgen kann .Es versteht sich von selbst, dass der Schweißvorgang keine Spur im Fügebereich hinterlässt und insbesondere keine Lochbildung im Austrittsbereich des Schweißpins zu erkennen ist.

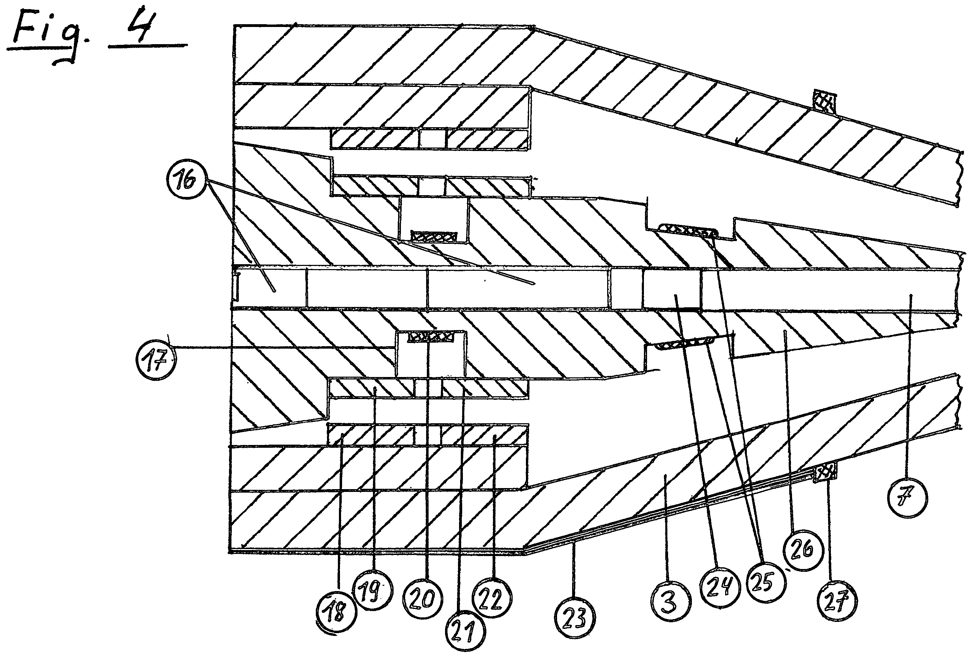

Die Fig.4: zeigt Einzelheiten der Messwert - Erfassung. In dieser Darstellung ist die Werkzeugglocke 3 stilisiert im Schnitt mit dem Werkzeug - Aufnahmekegel 26 dargestellt.

In der Längsachse des Haltekegels, wie er in der Fig.1 gezeigt ist, ist ein zweiteiliges Stellelement 16 für die Axialverstellung eines Schafts des Reibstifts zu sehen.

Auf der, im Schnitt gezeigten, unteren Seite der Werkzeugglocke 3 ist hier ein Sensor 23 mit seinem zugehörigen Verstärker 27 und mit seiner Antenne zu erkennen. Dieser Sensor 23, beispielhaft in der Form eines Dehnungs - Messstreifens (DMS) an der Außenseite der Werkzeugglocke 3, dient zur Erfassung der Verformung der Werkzeugglocke 3. Der DMS ist hier beispielhaft, es kann sich auch um einen Sensor 23 zur Bestimmung von Kraft, Druck oder Weg handeln. Dieser an der Außenseite der Werkzeugglocke 3 in Längsrichtung angebrachte Dehnungs - Messstreifen ist deshalb an derjenigen Seite der Werkzeugglocke 3 angebracht, die der Bearbeitungsrichtung entgegengesetzt ist, weil hier die stärkste Verformung der Werkzeugglocke 3 zu erwarten ist. Zur Verstärkung des vom Sensor 23 ermittelten Messsignals dien, wie schon erwähnt, ein Verstärker 27 mit seiner Antenne.

Der gezeigte Werkzeug - Aufnahmekegel 26 mit dem Schaft des Reibstifts 7 lässt hierbei in seinem breiteren Bereich eine Kegel - Taillierung 17 erkennen die zur Aufnahme eines Sensors 20 dient. Diese Taillierung ist hierbei zur Verdeutlichung betont herausgestellt. Die mechanische Querschnitts - Verengung durch die Kegel - Taillierung 17 und die an dieser Stelle erfolgte Platzierung des Sensors 20 ermöglichen die Messung der am Werkzeug - Aufnahmekegel 26 angreifenden Axialkraft und des Drehmoments, sowie die Messung des hier auftretenden Biegemoments. Die Signalübertragung der von dem Sensor 20 ermittelten Messwerte erfolgt über einen, mit dem Werkzeug - Aufnahmekegel 26, drehbaren Signalverstärker 21 und einer Rotorantenne. Der Empfang und die Weiterleitung der von dem Sensor 20 ermittelten Messwerte erfolgt über eine statisch fest stehende Antenne 22. Im vorderen Bereich des Werkzeug - Aufnahmekegels 26 befindet sich eine weitere, nicht näher bezeichnete, Taillierung, die Dehnungs - Messstreifen 25 Raum bietet, und die die Messung der auf den Pinschaft 7 , und damit die Schweißpin - Spitze direkt wirkende Axialkraft ermöglicht. Die Dehnungs - Messtreifen 25 bestehen aus beispielsweise drei Streifen, die im Abstand von 120 Grad am Umfang des Werkzeug - Aufnahmekegels 26 verteilt, in der dargestellten Taillierung angebracht sind. Es können hier auch mehr als drei Streifen am Umfang verteilt angebracht sein. Optional kann sich hier zusätzlich in der Längsachse des Pinschafts 7 ein piezoelektrischer Kraft - Mess - Sensor 24, der ebenfalls zur Messung der Axialkraft dient, befinden. Im Betrieb können für besonders empfindliche Prozesse die Messwerte der Sensoren 24 und 25 gleichzeitig erfasst und zueinander in Bezug gesetzt werden, um Messfehler auszuschließen. Der Empfang und die Weiterleitung der von den Sensoren 24 und 25 ermittelten Messwerte erfolgt ebenfalls über die statisch feststehende Antenne 22. Zur Stromversorgung der beschriebenen Mess - Systeme dient eine induktive Stromversorgung , deren statische primäre Wicklung mit 18 und deren bewegliche sekundäre Wicklung mit 19 bezeichnet ist.

Wie schon in der Beschreibung zu der Fig.3 beschrieben wurde, werden bei dem erfindungsgemäßen Schweißverfahren alle interessierenden Prozessparameter mittels verschiedenster Sensoren in Echtzeit erfasst. Es ergeben sich im Wesentlichen folgende Kombinationen von Messwerten an Werkzeugen und entsprechende Aktionen der Prozessführung.
a) Am Schweißschuh 8 und am Schweißpin 11 wird jeweils die Wirkkraft gemessen. Hierbei werden beide mit einem geregelten Druck beaufschlagt.
b) Am Schweißschuh 8 wird die Wirkkraft gemessen, während der Schweißpin 11 seine Position beibehält. Die Wirkkraft am Schweißschuh 8 wird geregelt.
c) Die Position des Schweißschuhs 8 bleibt unverändert. Die Wirkkraft am Schweißpin 11 wird gemessen und geregelt
d) Die Wirkkraft am Schweißschuh 8 wird gemessen, der Schweißschuh 8 erhält einen Vorschub. Am Schweißpin 11 werden das Drehmoment, der Vorschub und der Druck gemessen.
e) Der Schweißschuh 8 wird mit der Wirkung der Span - Leitstufe 9 betrieben, die Temperatur des Schweißpins 11 wird gemessen. Der Hub des Schweißpins 11 wird in Abhängigkeit von dem übertragenen Drehmoment und der Wirkkraft geregelt.

Insgesamt erfolgt also eine Messung und Regelung der auf den Schweißpin (11) wirkenden Axialkraft, und eine Messung und Regelung des auf den Schweißpin (11) wirkenden Drehmoments. Darüber hinaus erfolgt eine automatische Längenverstellung des Schweißpins (11) mittels eines oder mehreren, nicht näher bezeichneten, piezoelektrischen Stellelements, das auch sensorische Messeigenschaften besitzt und eine Messung der Temperatur am Schweißpin (11) mittels eines, nicht näher bezeichneten, Infrarot - Sensors oder dergl.

Weiter erfolgt eine Messung und Regelung der auf den Schweißschuh (8) wirkenden Druckkraft. Der Vorschub des Schweißschuhs (8) erfolgt erfindungsgemäß in Abhängigkeit vom gemessenen Axialdruck auf den Schweißschuh (8). Es wird ferner mittels, nicht näher bezeichneten, Temperatursensoren dessen Temperatur gemessen

Die Ausbildung der Schweißnaht, deren Güte und deren Verlauf wird während des gesamten Schweißprozesses fortlaufend optisch und mittels, den Fügepartnern entsprechenden, Güte - Parametern überwacht.

Die komplexe Steuerung der beschriebenen Bewegungsabläufe erfordert ein spezielles Steuerungsprogramm.

### Bezugszeichenliste

- 1: Aufnahmeplatte
- 2: Antriebskopf
- 3: Werkzeugglocke für die Halterung eines Schweißschuhs
- 4: Schweißschuh - Haltering
- 5: Pinlager
- 6: Fügepartner
- 7: Schaft des Reibstiftes (Pinschaft)
- 8: Schweißschuh mit Pinlager
- 9: Span - Leitstufe
- 10: Material - Austrittsbereich
- 11: Schweißpin
- 12: Gleitfläche des Schweißschuhs
- 13: hinterer Fügepartner
- 14: vorderer Fügepartner
- 15: Weg eines Pins beim Austritt
- 16: Stellelement für die Axialverstellung des Pinschafts
- 17: Kegel - Taillierung zur Aufnahme eines Sensors
- 18: Primärwicklung der induktiven Stromversorgung
- 19: Sekundärwicklung der induktiven Stromversorgung
- 20: Sensor ( zum Beispiel DMS )für den Werkzeug - Aufnahmekegel 16
- 21: Sensor - Signalverstärker und Rotorantenne
- 22: statische Antenne
- 23: Sensor am Schweißschuh - Haltekegel ( DMS - Druckmesser für Schweißschuh)
- 24: piezoelektrischer Kraft - Mess - Sensor
- 25: Sensor zur Messung der Axialkraft
- 26: Werkzeug - Aufnahmekegel

## Patentansprüche

1. Verfahren zur Verwendung einer Vorrichtung zum homogenen Verschweißen flächig gebogener Strukturen in der Form mindestens zweier Fügepartner durch Rührreibschweißen, mit den folgenden Merkmalen:
a) einer, von einer Führungsmaschine geführten, Aufnahmeplatte (1) mit einem Antriebskopf (2) und einer daran befestigten Werkzeugglocke (3) mit einer Schweißschuh-Halterung (4) und einem Pinlager (5) für einen Schweißpin (11) eines Schweißschuhs (8), wobei
b) der Schweißschuh (8) eine kreisförmige Grundform aufweist, und
c) die Werkzeugglocke (3) einen streifenförmigen Sensor (23) aufweist, der zur Bestimmung von Kraft, Druck oder Weg ausgebildet ist und auf der Seite der Werkzeugglocke (3) angebracht ist, die der Flussrichtung des Schweißprozesses entgegengesetzt ist, und wobei eine Kegel-Taillierung (17) im breiteren Bereich des Werkzeug-Aufnahmekegels (26) vorgesehen ist, die der Aufnahme eines Sensors (20) zur Erfassung der Axialkraft, des Drehmoments und des Biegemoments an dem Schweißpin (11) dient, und wobei eine weitere Taillierung im vorderen Bereich des Werkzeug-Aufnahmekegels (26) mit Sensoren (25) zur Messung der auf den Schweißpin (11) wirkenden Axialkraft und einem piezoelektrischen Kraft-Mess-Sensor (24) in der Längsachse des Schafts (7) des Reibstifts, ebenfalls zur Messung der Axialkraft, vorgesehen ist, und wobei ein Sensor-Signalverstärker mit einer Rotorantenne (21) zum Empfang, zur Verstärkung und zur Weiterleitung aller erfassten Messwerte vorgesehen ist, wobei eine statische Antenne (22) zur Weiterleitung dieser Messwerte an eine Maschinensteuerung vorgesehen ist, und wobei ein induktives Stromversorgungs-System zur Versorgung des Mess-Systems aus einer sich bewegenden, sekundären Wicklung (19) und einer fest stehenden, primären Wicklung (18) vorgesehen ist,
wobei sich auf der kreisförmigen Grundform des Schweißschuhs (8) über den Querschnitt verlaufend und im rechten Winkel zu dieser Grundform verlaufend, ein Quersteg befindet, der die Breite von 1/4 bis 1/5 des Durchmessers der Grundform aufweist und eine bogenförmige Schuh-Gleitfläche und Schuh-Glättfläche aufweist, wobei sich auf der Vorderseite dieser Fläche im Bereich des Randes dieser Fläche eine kleine ebene Fläche in der Form einer kerbartigen Verjüngung, die Span-Leitstufe (9) befindet, wobei die Schuh-Gleitfläche und die Schuh-Glättfläche im Wesentlichen der Oberflächenkrümmung der jeweils vorliegenden Fügepartner (6) entspricht,
**dadurch gekennzeichnet, dass**
die auf den Schweißschuh (8) wirkende Druckkraft gemessen und geregelt wird wobei der Vorschub des Schweißschuhs (8) in Abhängigkeit vom gemessenen Axialdruck auf den Schweißschuh (8) erfolgt und
eine Positionsregelung des Schweißpins (11) und eine Kraftregelung des Schweißschuhs (8) synchronisiert erfolgt.

2. Verfahren nach Anspruch 1, **dadurch gekennzeichnet, dass** ein Sensor die Temperatur des Schweißpins (11) und des Schweißschuhs (8) ermittelt.

## Claims

1. A method of using a device for homogeneously welding flat-bent structures in the form of at least two assembly parts by friction stir welding, comprising the following characteristics:
a) a receiving plate (1) guided by a guiding machine and accompanied by a drive head (2), and a tool bell (3) attached to it and accompanied by a welding shoe support (4) and a spindle bearing (5) for a welding spindle (11) of a welding shoe (8), wherein
b) the welding shoe (8) has a circular basic shape, and
c) the tool bell (3) includes a strip-shaped sensor (23), which is designed to determine a force, a pressure, or a displacement and is mounted on the side of the tool bell (3) opposite to the welding process flow direction, and wherein a conical profiling (17) is provided in the wider area of the tool receiving cone (26) to accommodate a sensor (20) for determining an axial force, a torque, and a bending moment on the welding spindle (11), and wherein another profiling is provided in the front area of the tool receiving cone (26) with sensors (25) for measuring the axial force acting on the welding spindle (11) and with a piezoelectric force sensor (24) in the longitudinal axis of the friction pin rod (7), also for measuring the axial force, and wherein a sensor signal amplifier is provided with a rotor antenna (21) to receive, amplify, and transmit all determined measurement values, wherein a static antenna (22) is provided to transmit these measurement values to a machine control, and wherein an inductive power supply system is provided to power the measurement system from a movable secondary winding (19) and a fixed primary winding (18), wherein a crossbar, extending over the circular basic shape of the welding shoe (8) above the cross-section and extending perpendicularly to this basic shape, is provided with a width ranging from 1/4 to 1/5 of a diameter of the basic shape and with an arc-shaped sliding and smoothing surface of the shoe, wherein a small flat surface in the form of a notch-shaped taper, as a chip guiding step (9), is located on the front face of this surface in the edge area of this surface, wherein the sliding and smoothing surface of the shoe substantially corresponds to the surface curvature of the respective assembly parts (6),
**characterized in that**
the pressure force acting on the welding shoe (8) is measured and controlled, wherein the displacement of the welding shoe (8) is carried out based on the measured axial pressure on the welding shoe (8), and a position control of the welding spindle (11) and a force control of the welding shoe (8) are carried out synchronously.

2. The method of claim 1, **characterized in that** a sensor determines a temperature of the welding spindle (11) and the welding shoe (8).

## Revendications

1. Procédé d'utilisation d'un dispositif permettant le soudage homogène de structures cintrées à plat sous la forme d'au moins deux pièces d'assemblage par soudage par friction-malaxage, et ayant les caractéristiques suivantes :
a) une plaque de réception (1) guidée par une machine de guidage et accompagnée d'une tête d'entraînement (2), et une cloche d'outil (3) fixée à celle-ci et accompagnée d'un support de sabot de soudage (4) et d'un palier de broche (5) pour une broche de soudage (11) d'un sabot de soudage (8), dans lequel
b) le sabot de soudage (8) a une forme de base circulaire, et
c) la cloche d'outil (3) comprend un capteur en forme de bande (23), lequel est conçu pour déterminer la force, la pression ou le déplacement et est monté sur le côté de la cloche d'outil (3) qui est opposé à la direction de flux du processus de soudage, et dans lequel un profilage conique (17) est prévue dans la zone plus large du cône de réception d'outil (26) pour permettre de recevoir un capteur (20) servant à déterminer la force axiale, le couple et le moment de flexion sur la broche de soudage (11), et dans lequel un autre profilage est prévu dans la zone avant du cône de réception d'outil (26) avec des capteurs (25) servant à mesurer la force axiale agissant sur la broche de soudage (11) et avec un capteur de force piézoélectrique (24) dans l'axe longitudinal de la tige (7) du poinçon de friction, servant également à mesurer la force axiale, et dans lequel un amplificateur de signal de capteur est prévu avec une antenne de rotor (21) pour permettre de recevoir, d'amplifier et de transmettre toutes les valeurs de mesure déterminées, dans lequel une antenne statique (22) est prévue pour permettre de transmettre ces valeurs de mesure à une commande de machine, et dans lequel un système d'alimentation électrique inductive est prévu pour permettre d'alimenter le système de mesure à partir d'un enroulement secondaire mobile (19) et d'un enroulement primaire fixe (18), dans lequel une traverse, qui s'étend sur la forme de base circulaire du sabot de soudage (8) au-dessus de la section transversale et qui s'étend perpendiculairement à cette forme de base, est prévue avec une largeur allant de 1/4 jusqu'à 1/5 du diamètre de la forme de base et avec une surface de glissement et de lissage du sabot en forme d'arc, dans lequel une petite surface plane sous la forme d'un rétrécissement en forme d'encoche, en tant que niveau de guidage des copeaux (9), se trouve sur la face avant de cette surface dans la zone du bord de cette surface, dans lequel la surface de glissement et de lissage du sabot correspond essentiellement à la courbure de surface des pièces d'assemblage respectives (6),
**caractérisé en ce que**
la force de pression agissant sur le sabot de soudage (8) est mesurée et contrôlée, dans lequel le déplacement du sabot de soudage (8) s'effectue en fonction de la pression axiale mesurée sur le sabot de soudage (8), et un contrôle de position de la broche de soudage (11) et un contrôle de force du sabot de soudage (8) s'effectuent de manière synchronisée.

2. Procédé selon la revendication 1, **caractérisé en ce qu'**un capteur détermine la température de la broche de soudage (11) et du sabot de soudage (8).
